**Europäisches Patentamt**

**European Patent Office**

**Office européen des brevets**

(19)

(11) Veröffentlichungsnummer: **0 223 316
B1**

(12) EUROPÄISCHE PATENTSCHRIFT

(45) Veröffentlichungstag der Patentschrift:
28.02.90

(51) Int. Cl.⁴: **H02M 3/156**

(21) Anmeldenummer: **86202051.8**

(22) Anmeldetag: **20.11.86**

(54) Schaltungsanordnung zur Erzeugung einer Gleichspannung aus einer sinusförmigen Eingangsspannung.

(30) Priorität: **22.11.85 DE 3541307**

(43) Veröffentlichungstag der Anmeldung:
**27.05.87 Patentblatt 87/22**

(45) Bekanntmachung des Hinweises auf die Patenterteilung:
**28.02.90 Patentblatt 90/9**

(84) Benannte Vertragsstaaten:
**DE FR GB**

(56) Entgegenhaltungen:
**DE-A- 2 652 275
GB-A- 2 147 159
US-A- 4 190 882**

(73) Patentinhaber: **Philips Patentverwaltung GmbH,
Wendenstrasse 35 Postfach 10 51 49,
D-2000 Hamburg 1(DE)**

(84) Benannte Vertragsstaaten: **DE**

(73) Patentinhaber: **N.V. Philips' Gloeilampenfabrieken,
Groenewoudseweg 1, NL-5621 BA Eindhoven(NL)**

(84) Benannte Vertragsstaaten: **FR GB**

(72) Erfinder: **Albach, Manfred, Dr., Hasbach 5,
D-5100 Aachen(DE)**
Erfinder: **Wegener, Armin, Kleinmarschierstrasse 61,
D-5100 Aachen(DE)**

(74) Vertreter: **Hartmann, Heinrich, Dipl.-Ing. et al, Philips
Patentverwaltung GmbH
Wendenstrasse 35 Postfach 10 51 49,
D-2000 Hamburg 1(DE)**

## Beschreibung

Die Erfindung betrifft eine Schaltungsanordnung zur Erzeugung einer Gleichspannung aus einer im wesentlichen sinusförmigen Eingangsspannung, mit einem Filter zur Unterdrückung hochfrequenter Störsignale, mit einem eine Diode, eine Spule, einen Kondensator und einen Transistor umfassenden Schaltnetzteil, das über einen Gleichrichter mit dem Filter gekoppelt ist und dessen Elemente so angeordnet sind, daß im leitenden Zustand des Transistors die Diode gesperrt ist und der Spulenstrom zumindest über den Transistor fließt und im gesperrten Zustand über die Diode und eine Parallelschaltung aus einer Last und dem Kondensator, sowie mit einem Impulsgenerator, der aus der Eingangsspannung Schaltimpulse für den Transistor erzeugt, deren Frequenz sich zeitlich monoton zwischen einer minimalen Frequenz beim Maximalwert der gleichgerichteten Eingangsspannung und einer maximalen Frequenz beim Minimalwert ändert.

Eine solche Schaltungsanordnung ist aus der deutschen Offenlegungsschrift 26 52 275 bekannt und kann z.B. als elektrisches Vorschaltgerät für Gasentladungslampen eingesetzt werden. Das Filter ist an ein Wechselspannungsnetz angeschlossen und entnimmt diesem einen praktisch sinusförmigen Strom. Der Transistor wird dabei so gesteuert, daß die Einschaltdauer konstant ist, d.h. der Transistor wird dann wieder eingeschaltet, wenn der Spulenstrom den Wert Null erreicht. Die zeitliche Änderung der Frequenz der den Transistor steuernden Impulse verläuft während einer Halbwelle der Eingangsspannung parabelförmig. Der Maximalwert der Frequenz wird dabei bei dem Minimalwert der Eingangsspannung und der Minimalwert der Frequenz bei dem Maximalwert der Eingangsspannung erreicht.

Bedingt durch die Schaltvorgänge im Schaltnetzteil sind der Wechselspannung Störspannungen überlagert. Diese Störspannungen treten oberhalb der minimalen Frequenz der Impulse auf und machen sich insbesondere im niedrigen Frequenzbereich störend bemerkbar. Auf bestimmte tolerierbare Werte werden solche Störspannungen durch das zwischen dem Eingang der Schaltungsanordnung und dem Gleichrichter geschaltete Filter reduziert. Üblicherweise ist ein solches Filter aus einer Spule und einem Kondensator aufgebaut.

In der VDE-Norm 0871 sind zulässige Werte für solche Störspannungen festgelegt. Bei der Dimensionierung des Filters sind die in der VDE-Norm 0871 vorgeschriebenen maximalen Störspannungen einzuhalten. Es hat sich gezeigt, daß insbesondere die Störspannungen bei niedrigen Frequenzen die Größe der Spule des Filters bestimmen.

Aus der GB-A 2 147 159 ist ein Energieumsetzer zum Betreiben von Gasentladungslampen bekannt. Der Umsetzer wird aus einem Wechselstromnetz über einen Brückengleichrichter gespeist. An diesen ist die Reihenschaltung einer Induktivität und eines Schalttransistors angeschlossen, der durch die Reihenschaltung einer Diode mit der Parallelschaltung eines Kondensators mit der Last überbrückt ist. Der Brückengleichrichter liefert eine sinusförmig pulsierende Gleichspannung an die Reihenschaltung aus der Induktivität und dem Transistor. Ferner ist eine Schaltsteuerung vorgesehen, die den Transistor mit einer Frequenz, die höher ist als die Netzfrequenz, periodisch in den leitenden und in den gesperrten Zustand schaltet. Dabei wird entweder die Zeitdauer, während der sich der Transistor im leitenden Zustand befindet, während der Zeitabschnitte geringer gleichgerichteter Spannung größer gewählt als während der Maxima der gleichgerichteten Spannung, oder die Impulsdauer der Zeitabschnitte, in denen der Transistor leitet, wird konstant gehalten und nur die Impulsfrequenz wird variiert, so daß die Anzahl der Impulse bei geringer gleichgerichteter Spannung groß und während der Maxima der gleichgerichteten Spannung klein ist.

Der Erfindung liegt die Aufgabe zugrunde, die Störspannungen bei niedrigen Frequenzen zu verringern.

Die Aufgabe wird erfindungsgemäß dadurch gelöst, daß der Impulsgenerator einen Spannungs-Frequenz-Umsetzer enthält, der aus der Eingangsspannung den Beginn der Schaltimpulse bestimmende Startimpulse liefert, deren Frequenz sich zwischen den Extremwerten so ändert, daß die zweite Ableitung der Frequenz nach der Zeit stets Null oder negativ ist, und daß der Impulsgenerator einen ersten Integrator, der ein dem Ausgangsstrom des Gleichrichters proportionales integriertes Ausgangssignal erzeugt und dessen Zeitkonstante größer ist als der reziproke Wert der minimalen Frequenz, eine die Differenz zwischen einem der gleichgerichteten Eingangsspannung proportionalen Signal und dem Ausgangssignal des ersten Integrators bildende Überlagerungsschaltung und eine erste Vergleichsschaltung enthält, die ein Signal zur Beendigung eines Impulses erzeugt, wenn ein dem Ausgangsstrom des Gleichrichters proportionales Signal größer als das Ausgangssignal der Überlagerungsschaltung ist.

In der erfindungsgemäßen Schaltungsanordnung wird die Frequenz der Impulse so variiert, daß zwischen der maximalen und minimalen Frequenz der zeitliche Verlauf der Frequenz entweder linear oder konkav ist. Die Frequenz ändert sich also zwischen den Extremwerten so, daß die zweite Ableitung der Frequenz nach der Zeit stets Null oder negativ ist. D.h., für die Frequenz $f$ gilt für $0 \leq wt \leq \pi/2$:

$$f \geq fmax - (fmax - fmin) * 2wt/\pi \quad (I)$$
und für $\pi/2 \leq wt \leq \pi$:
$$f \quad fmin + (fmax - fmin) * 2(wt - \pi/2)/\pi , \quad (2)$$

wobei fmin die minimale Frequenz, fmax die maximale Frequenz, w die Kreisfrequenz und t die Zeit ist. Da in dieser Schaltungsanordnung im Bereich der minimalen Frequenz sich der zeitliche Verlauf der Frequenz schneller ändert als bei der bekannten Schaltungsanordnung, werden die Störspannungen insbesondere im niedrigen Frequenzbereich vermindert. Daduch nimmt die Größe der Spule des Filters einen kleineren Wert an, d.h. die Induktivität der Spule wird geringer.

Mit Hilfe des ersten Integrators, der Überlagerungsschaltung und der ersten Vergleichsschaltung wird der Ausschaltzeitpunkt des Transistors so bestimmt, daß im Mittel eine sinusförmige Stromaufnahme aus dem Netz erfolgt. Der erste Integrator bildet den Mittelwert der durch die Schaltvorgänge des Transistors erzeugten hochfrequenten Anteile des dem Ausgangsstrom des Gleichrichters proportionalen Signals. In der Überlagerungsschaltung wird ein Vergleichssignal aus der Differenz des Ausgangssignales des ersten Integrators und einem der gleichgerichteten Eingangsspannung proportionalen Signal gebildet. Das Ausgangssignal der Überlagerungsschaltung wird in der ersten Vergleichsschaltung mit einem dem Ausgangsstrom des Gleichrichters proportionalen Signal verglichen. Wird das dem Ausgangsstrom des Gleichrichters proportionale Signal größer als das Ausgangssignal der Überlagerungsschaltung, erzeugt die erste Vergleichsschaltung ein Signal, das den Transistor aus dem leitenden in den gesperrten Zustand versetzt.

Es sei noch erwähnt, daß aus der US-Patentschrift 4 190 882 ein Schaltnetzteil bekannt ist, das eine Hochfrequenzeinrichtung, z.B. einen Radarsender, mit einer Gleichspannung versorgt und das von einem Impulsgenerator gesteuert wird. Die Frequenz der Impulse variiert zeitlich linear zwischen 9 kHz und 11 kHz. Diese Frequenzänderung ist jedoch unabhängig von der Eingangsspannung des Schaltnetzteiles. Außerdem soll diese Schaltungsanordnung Störungen im zu sendenden Signal verringern, die durch die Schaltvorgänge im Schaltnetzteil bewirkt werden.

Ergänzend wird auf die europäische Anmeldung 86 202 050 (Veröffentlichungsnummer 0 223 315) hingewiesen, die den gleichen Zeitrang wie die vorliegende Erfindung aufweist.

In einer Weiterbildung der Erfindung ist vorgesehen, daß der Spannungs-Frequenz-Umsetzer eine eine Referenzspannung mit einer der gleichgerichteten Eingangsspannung proportionalen Spannung vergleichende zweite Vergleichsschaltung, ein von der Vergleichsschaltung bei größerer Referenzspannung aktiviertes monostabiles Kippglied, einen das Ausgangssignal des monostabilen Kippgliedes integrierenden zweiten Integrator, dessen Zeitkonstante größer als der reziproke Wert der Frequenz der Eingangsspannung ist, und einen vom zweiten Integrator gesteuerten die Startimpulse erzeugenden spannungsgesteuerten Oszillator enthält. Bei dieser Weiterbildung ändert sich die Frequenz zeitlich linear zwischen dem Maximal- und Minimalwert. In der Formel (I) und (2) gilt in diesem Fall das Gleichheitszeichen. Als Filter wird dabei eine Kombination aus einer Spule und einem Kondensator verwendet. Für mehrstufige Filter, d.h. eine Kettenschaltung aus einfachen Filtern, die eine Spule und einen Kondensator enthalten, ist ein zeitlich konkaver Frequenzverlauf erforderlich. In diesem Fall gilt in der Formel (I) und (2) nicht das Gleichheitszeichen.

Die Erzeugung der Schaltimpulse im Impulsgenerator kann ein Kippglied übernehmen, das die Startimpulse und das Signal der ersten Vergleichsschaltung erhält.

Die Überlagerungsschaltung kann so ausgebildet sein, daß sie einen Verstärker umfaßt, dessen nichtinvertierendem Eingang ein der gleichgerichteten Eingangsspannung proportionales Signal zugeführt wird und dessen invertierender Eingang mit einem an den Ausgang der Überlagerungsschaltung angeschlossenen ersten Widerstand und mit einem an den Ausgang des Integrators angeschlossenen zweiten Widerstand verbunden ist. Für das Ausgangssignal des Integrators wirkt der Verstärker als invertierender und für das der gleichgerichteten Eingangsspannung proportionale Signal als nichtinvertierender Verstärker. Das Vergleichssignal wird erzeugt, indem das der gleichgerichteten Eingangsspannung proportionale Signal und das Ausgangssignal durch den ersten und zweiten Widerstand bewertet werden und die Differenz zwischen ihnen gebildet wird.

Zur genauen Einstellung des der Vergleichsschaltung zugeführten Ausgangssignals der Überlagerungsschaltung ist vorgesehen, daß zwischen der Überlagerungsschaltung und der ersten Vergleichsschaltung ein Spannungsteiler angeordnet ist.

Als Schaltnetzteil können in dieser Schaltungsanordnung drei verschiedene Ausführungsformen verwendet werden. Eine erste Ausführungsform, ein Aufwärtsspannungswandler, ist so aufgebaut, daß die Spule einerseits mit dem Gleichrichter und andererseits mit dem Transistor und über die Diode mit der Parallelschaltung aus Last und Kondensator verbunden ist. Beim Aufwärtsspannungswandler ist die Ausgangsspannung immer größer als die Eingangsspannung. In der zweiten Ausführungsform, dem Abwärtsspannungswandler, ist die Ausgangsspannung kleiner als die Eingangsspannung. Bei diesem Schaltnetzteil ist der Transistor einerseits mit dem Gleichrichter und andererseits mit der Diode und über die Spule mit der Parallelschaltung aus Last und Kondensator verbunden. Bei der dritten Ausführungsform, dem Aufwärts/Abwärtsspannungswandler ist der Transistor einerseits mit dem Gleichrichter und andererseits mit der Spule und über die Diode mit der Parallelschaltung aus Kondensator und Last verbunden. Bei dieser Schaltung kann die Ausgangsspannung grör oder auch kleiner als die Eingangsspannung sein.

Anhand der Zeichnungen wird im folgenden die Erfindung näher erläutert. Es zeigen:

Fig. I ein erstes Ausführungsbeispiel der Erfindung,
Fig. 2 Diagramme zur Erläuterung der Fig. I und
Fig. 3 und 4 zwei weitere Schaltnetzteile.

In Fig. I wird einem Filter I, das eine Spule 2 und einen Kondensator 3 enthält, eine sinusförmige Eingangsspannung mit einem Effektivwert von z.B. 220 V und einer Frequenz von 50 Hz zugeführt. Die Spule 2 ist einerseits mit einem Eingangsanschluß und andererseits mit dem Kondensator 3 verbunden, der parallel zum Ausgang des Filters I liegt. Der Ausgang des Filters I ist mit einer aus vier Dioden bestehenden Gleichrichterbrücke 4 verbunden, deren Ausgang an einen Aufwärtsspannungswandler 5 (Schaltnetzteil) und einen zur Steuerung des Aufwärtsspannungswandlers 5 dienenden Impulsgenerator 6 angeschlossen ist. Der Aufwärtsspannungswandler 5 enthält eine Spule l0, die mit dem positiven Ausgangsanschluß 7 des Gleichrichters 4 verbunden ist. Des weiteren umfaßt der Aufwärtsspannungswandler 5 einen NPN-Transistor ll, eine Diode l2 und einen Kondensator l3. Der Kollektor des Transistors ll, die Anode der Diode l2 und der dem Gleichrichter 4 abgewandte Anschlußpunkt der Spule l0 sind miteinander verbunden. Zwischen der Kathode der Diode l2 und dem Emitter des Transistors ll liegt der Kondensator l3, dem eine Last l4, z.B. eine Gasentladungslampe mit den erforderlichen Schaltungen, parallel geschaltet ist. Der Basis des Transistors ll werden Schaltimpulse von dem Impulsgenerator 6 zugeführt, durch die der Transistor ll in den leitenden Zustand versetzt wird. Der Transistor ll kann auch ein Feldeffekttransistor sein.

Der Impulsgenerator 6 enthält sechs Widerstände 5l bis 56, einen Spannungs-Frequenz-Umsetzer 25, ein RS-Kippglied 26, eine Vergleichsschaltung 27, einen Integrator 28 und eine Überlagerungsschaltung 29. Der Widerstand 5l ist einerseits mit dem Ausgangsanschluß 7 des Gleichrichters 4 verbunden und andererseits mit dem an den Ausgangsanschluß 8 angeschlossenen Widerstand 52, mit dem über den Widerstand 54 ebenfalls an den Ausgangsanschluß 8 angeschlossenen Widerstand 53 und mit einem Eingang 30 des Spannungs-Frequenz-Umsetzers 25. Der Spannungs-Frequenz-Umsetzer 25 enthält eine Vergleichsschaltung 3l, ein monostabiles Kippglied 32, einen Integrator 33 und einen spannungsgesteuerten Oszillator 34. Die Vergleichsschaltung 3l kann z.B. ein Komparator sein, dessen invertierender Eingang auch der Eingang 30 des Spannungs-Frequenz-Umsetzers 25 ist. Dem nichtinvertierenden Eingang der Vergleichsschaltung 3l wird eine Referenzspannung Uref zugeführt. Das Ausgangssignal der Vergleichsschaltung 3l wird über das monostabile Kippglied 32 dem Integrator 33 zugeleitet, der z.B. einen Widerstand und einen Kondensator umfaßt und dessen Zeitkonstante größer sein muß als der reziproke Wert der Frequenz des sinusförmigen Eingangssignals. Der dem Integrator 33 nachgeschaltete spannungsgesteuerte Oszillator 34 erzeugt Impulse, die über einen Ausgang 35 des Spannungs-Frequenz-Umsetzers 25 dem Setz-Eingang des RS-Kippgliedes 26 zugeführt werden. Der Ausgang des Kippgliedes 26 ist mit der Basis des Transistors ll gekoppelt.

Zwischen dem Ausgangsanschluß 8 des Gleichrichters 4 und dem Emitter des Transistors ll liegt ein Meßwiderstand l6, dem eine Reihenschaltung aus einem Widerstand 40 und einem Kondensator 4l parallel geschaltet ist. Der Widerstand 40 und der Kondensator 4l sind Bestandteil des Integrators 28, dessen Zeitkonstante größer als der Kehrwert der minimalen Frequenz der Schaltimpulse des Transistors ll sein muß. Der Verbindungspunkt zwischen Kondensator 4l und Widerstand 40 ist mit einem Eingang 60 der Überlagerungsschaltung 29 verbunden. Der andere Eingang 6l der Überlagerungsschaltung 29 ist an den Verbindungspunkt der Widerstände 53 und 54 geschaltet.

Die Überlagerungsschaltung 29 umfaßt einen Verstärker 62 und zwei Widerstände 63 und 64. An den invertierenden Eingang des Verstärkers 62 ist der mit dem Eingang 60 verbundene Widerstand 63 und der mit dem Ausgang 65 des Verstärkers 62 verbundene Widerstand 64 angeschlossen. Der Eingang 6l der Überlagerungsschaltung 29 ist der nichtinvertierende Eingang des Verstärkers 62. Der Ausgang 65 der Überlagerungsschaltung 29, der auch der Ausgang des Verstärkers 62 ist, ist über den Widerstand 55 mit der Vergleichsschaltung 27 verbunden, die ebenfalls ein Komparator sein kann. Der an den invertierenden Eingang des Komparators 27 angeschlossene Widerstand 55 bildet zusammen mit einem zwischen dem Anschlußpunkt 8 des Gleichrichters 4 und dem invertierenden Eingang des Komparators liegenden Widerstand 56 einen Spannungsteiler. Der nichtinvertierende Eingang der Vergleichsschaltung 27 ist mit dem Emitter des Transistors ll verbunden. Das Ausgangssignal der Vergleichsschaltung 27 wird dem Rücksetzeingang des Kippgliedes 26 zugeleitet.

Wenn der Transistor ll leitend ist, d.h. wenn der Basis des Transistors ll ein Strom zugeführt wird, ist die Diode l2 gesperrt, und der Strom I durch die Spule l0 fließt über die Kollektor-Emitter-Strecke des Transistors ll zum Ausgangsanschluß 8. Ist der Transistor ll gesperrt, d.h. der Basis des Transistors ll wird kein Strom zugeführt, ist die Diode l2 leitend, und der Strom I fließt zur Parallelschaltung aus Kondensator l3 und Last l4. Da die Frequenz, mit der der Transistor ll geschaltet wird, größer als 20 kHz ist, kann vorausgesetzt werden, daß die Spannung zwischen den Ausgangsanschlüssen 7 und 8 des Gleichrichters 4 konstant ist, d.h. während der Transistor ll leitend ist, wird der Strom I linear mit der Zeit größer und während der Transistor ll gesperrt ist, nimmt der Strom I zeitlich linear ab.

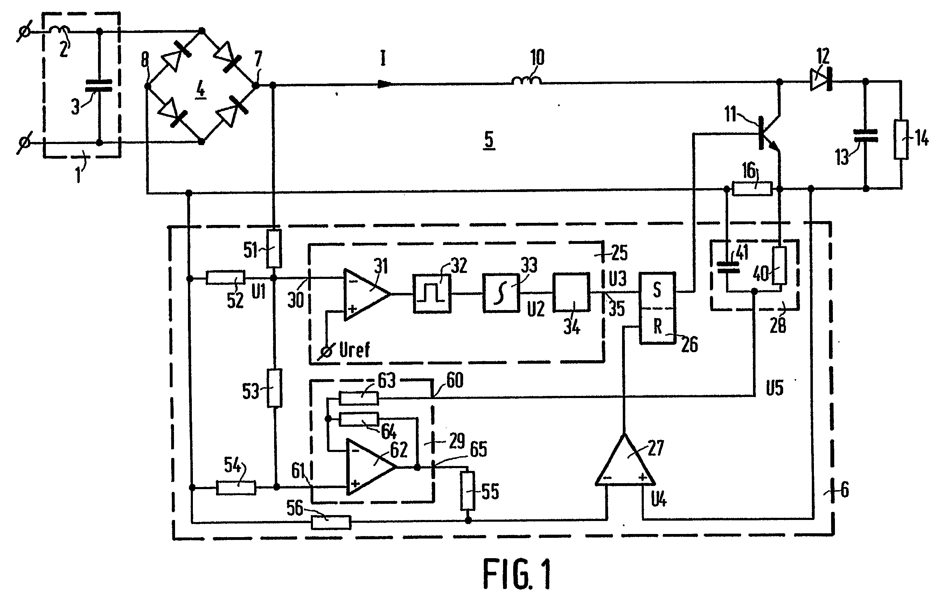

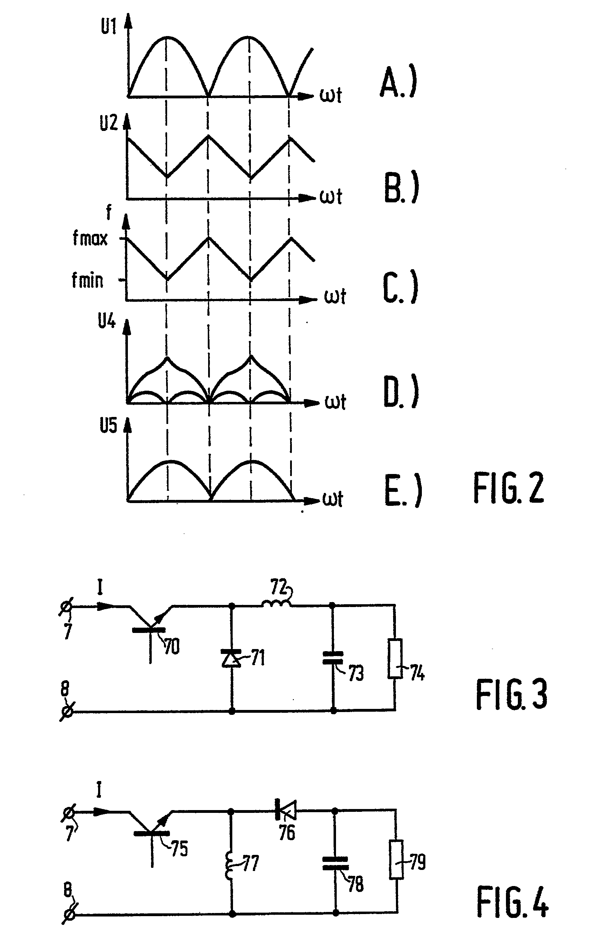

Aus der Spannung am Ausgang des Gleichrichters 4 erzeugt der Impulsgenerator Stromimpulse, die der Basis des Transistors ll zugeführt werden und deren Frequenz vom Wert der gleichgerichteten Eingangsspannung abhängig ist. Anhand der Fig. 2 wird im folgenden die Wirkungsweise des Impulsgenerators 6 erläutert. Am invertierenden Eingang der Vergleichsschaltung 3l, der auch der Eingang 30 des Spannungs-Frequenz-Umsetzers 25 ist, liegt eine Spannung Ul, die proportional der Spannung an den Ausgangsanschlüssen 7 und 8 des Gleichrichters 4 ist und in Diagramm A der Fig. 2 dargestellt ist. Diese proportionale Spannung Ul, die durch den Spannungteiler, der aus den Widerständen 5l bis 54 gebildet ist, bestimmt wird, wird mit der Referenzspannung Uref am nichtinvertierenden Eingang der Vergleichsschaltung verglichen und wenn die Spannung am invertierenden Eingang kleiner als die Referenzspannung Uref wird, gibt die Vergleichsschaltung ein Signal zum Erzeugen eines Impulses in dem monostabilen Kippglied 32 ab, der nach einer vorbestimmten Zeit, der Haltezeit, beendet ist. Die von dem monostabilen Kippglied 32 erzeugten Impulse treten zweimal pro Periode der Eingangsspannung auf und werden im Integrator 33 integriert. Das dreieckförmige Ausgangssignal U2 des Integrators 33 ist in Diagramm B der Fig. 2 dargestellt. Diese Ausgangsspannung U2 ist das frequenzbestimmende Steuersignal für den spannungsgesteuerten Oszillator 34, dessen Ausgangssignal U3 die Startimpulse für das Kippglied 26 bilden. In Diagramm C ist der Verlauf der Frequenz, die proportional zur Spannung U2 ist, dargestellt.

Beim minimalen Wert der der gleichgerichteten Ausgangsspannung des Gleichrichters 4 proportionalen Spannung Ul hat die Spannung U2 und damit die Frequenz der Startimpulse einen maximalen Wert, und beim maximalen Wert der Spannung Ul hat die Spannung U2 und ebenso die Frequenz einen minimalen Wert. Zwischen den Extremwerten ändert sich die Frequenz zeitlich linear. Folglich gelten für die Frequenz f der Schaltimpulse die folgenden Formeln. Für $0 \leqslant wt \leqslant \pi/2$ gilt

$$f = f_{max} - (f_{max} - f_{min}) * 2wt/ \quad (3)$$

und für $\pi/2 \leqslant wt \leqslant \pi$

$$f = f_{min} + (f_{max} - f_{min}) * 2(wt - \pi/2) /\pi , \quad (4)$$

wobei $f_{max}$ die maximale Frequenz, $f_{min}$ die minimale Frequenz, w die Kreisfrequenz und t die Zeit ist.

Das monostabile Kippglied 32 sollte so eingestellt werden, daß bei der Frequenz von 50 Hz des sinusförmigen Eingangssignals der Haltezustand 5 ms andauert und daß es nach weiteren 5 ms wieder gesetzt werden kann. Der dem nichtinvertierenden Eingang der Vergleichsschaltung 31 zugeführte Referenzwert muß so gewählt werden, daß der maximale Frequenzwert möglichst bei den entsprechenden Nullwerten der Eingangsspannung erreicht wird. Durch die Zeitkonstante des Integrators 33 wird die maximale bzw. minimale Frequenz festgelegt.

Durch einen Impuls des Spannungs-Frequenz-Umsetzers 25 wird das Kippglied 26 gesetzt und erzeugt einen Stromimpuls, der den Transistor ll in den leitenden Zustand versetzt. Der Ausgangsstrom l des Gleichrichters 4 erzeugt im Meßwiderstand eine dazu proportionale Spannung, die vom Integrator 28 integriert wird. Im Integrator 28 wird der Mittelwert der durch die Schaltvorgänge des Transistors ll erzeugten hochfrequenten Anteile der Spannung am Widerstand l6 gebildet. Am Ausgang 65 der Überlagerungsschaltung 29 erscheint also die durch die Widerstände 63 und 64 bewertete Differenz zwischen dem Ausgangssignal des Integrators 28 und dem der gleichgerichteten Eingangsspannung durch die Widerstände 51 bis 54 bestimmten proportionalen Signal.

In der Vergleichsschaltung 27 wird ein Impuls erzeugt, mit dem das Kippglied 26 zurückgesetzt wird, wenn die Spannung am Widerstand l6 größer ist als das über den aus den Widerständen 55 und 56 gebildeten Spannungsteiler geleitete Ausgangssignal der Überlagerungsschaltung 29. In Diagramm D der Fig. 2 sind die Einhüllenden der hochfrequenten Spannung U4 am Widerstand l6 dargestellt. Das Vergleichssignal muß durch die Widerstände 53 bis 56 und 63 und 64 so eingestellt werden, daß die Spannung U5 (in Diagramm E der Fig. 2 dargestellt), die am Kondensator 41 abfällt, angenähert einen gleichgerichteten sinusförmigen Verlauf aufweist.

Unter der Voraussetzung, daß die VDE-Norm 0871 erfüllt werden soll, ergibt sich für die Induktivität der Spule 2 des Filters I bei einer Induktivität von 5 mH der Spule I0 dann der minimale Wert, wenn die lineare zeitliche Variation der Frequenz der Schaltimpulse zwischen 30 und 115 kHz erfolgt. Hierbei nehmen insbesondere im niedrigen Frequenzbereich die Störspannungen ab.

Zwei weitere Schaltnetzteile, die in Fig. 3 und 4 dargestellt sind, können auch in der Schaltungsanordnung nach Fig. I verwendet werden. In Fig. 3 ist ein Abwärtsspannungswandler dargestellt, bei dem der Kollektor eines von dem Impulsgenerator 6 zu steuernden Transistors 70 an den Ausgangsanschluß 7 des Gleichrichters 4 angeschlossen ist und der Emitter an die Kathode einer Diode 71 und an eine Spule 72. Die Spule ist andererseits mit einer an den Anschlußpunkt 8 angeschlossenen Parallelschaltung aus einem Kondensator 73 und einer Last 74 verbunden. Ebenso ist die Anode der Diode 71 an den Anschlußpunkt 8 geschaltet.

In Fig. 4 ist ein Aufwärts/Abwärtsspannungswandler dargestellt, der ebenfalls einen Transistor 75 enthält, dessen Kollektor an den Anschlußpunkt 7 des Gleichrichters 4 angeschlossen ist, dessen Basis die Schaltimpulse des Impulsgenerators 6 zugeführt werden und dessen Emitter mit der Kathode einer Diode 76 und mit einem Anschlußpunkt einer Spule 77 verbunden ist. Die Anode der Diode 76 ist an eine mit dem Anschlußpunkt 8 verbundene Parallelschaltung aus einem Kondensator 78 und einer Last 79 geschaltet. Der andere Anschlußpunkt der Spule 77 ist auch an den Anschlußpunkt 8 des Gleichrichters 4 angeschlossen.

**Patentansprüche**

I. Schaltungsanordnung zur Erzeugung einer Gleichspannung aus einer im wesentlichen sinusförmigen Eingangsspannung, mit einem Filter (I) zur Unterdrückung hochfrequenter Störsignale, mit einem eine Diode (l2, 71, 76), eine Spule (l0, 72, 77), einen Kondensator (l3, 73, 78) und einen Transistor (ll, 70, 75) umfassenden Schaltnetzteil (5), das über einen Gleichrichter (4) mit dem Filter (I) gekoppelt ist und dessen Elemente so angeordnet sind, daß im leitenden Zustand des Transistors (ll, 70, 75) die Diode (l2, 71, 76) gesperrt ist und der Spulenstrom zumindest über den Transistor (ll, 70, 75) fließt und im gesperrten Zustand über die Diode (l2, 71, 76) und eine Parallelschaltung aus einer Last (l4, 74, 79) und dem Kondensator (l3, 73, 78), sowie mit einem Impulsgenerator (6), der aus der Eingangsspannung Schaltimpulse für den Transistor (ll, 70, 75) erzeugt, deren Frequenz sich zeitlich monoton zwischen einer minimalen Frequenz beim Maximalwert der gleichgerichteten Eingangsspannung und einer maximalen Frequenz beim Minimalwert ändert, dadurch gekennzeichnet, daß der Impulsgenerator (6) einen Spannungs-Frequenz-Umsetzer (25) enthält, der aus der Eingangsspannung den Beginn der Schaltimpulse bestimmende Startimpulse liefert, deren Frequenz sich zwischen den Extremwerten so ändert, daß die zweite Ableitung der Frequenz nach der Zeit stets Null oder negativ ist, und daß der Impulsgenerator (6) einen ersten Integrator (28), der ein dem Ausgangsstrom des Gleichrichters (4) proportionales integriertes Ausgangssignal (U5) erzeugt und dessen Zeitkonstante größer ist als der reziproke Wert der minimalen Frequenz, eine die Differenz zwischen einem der gleichgerichteten Eingangsspannung proportionalen Signal und dem Ausgangssignal des ersten Integrators (28) bildende Überlagerungsschaltung (29) und eine erste Vergleichsschaltung (27) enthält, die ein Signal zur Beendigung eines Impulses erzeugt, wenn ein dem Ausgangsstrom des Gleichrichters (4) proportionales Signal (U4) größer als das Ausgangssignal der Überlagerungsschaltung (29) ist.

2. Schaltungsanordnung nach Anspruch l, dadurch gekennzeichnet, daß der Spannungs-Frequenz-Umsetzer (25) eine eine Referenzspannung (Uref) mit einer der gleichgerichteten Eingangsspannung proportionalen Spannung (Ul) vergleichende zweite Vergleichsschaltung (3l), ein von der Vergleichsschaltung (3l) bei größerer Referenzspannung (Uref) aktiviertes monostabiles Kippglied (32), einen das Ausgangssignal des monostabilen Kippgliedes (32) integrierenden zweiten Integrator (33), dessen Zeitkonstante größer als der reziproke Wert der Frequenz der Eingangsspannung ist, und einen vom zweiten Integrator (33) gesteuerten die Startimpulse (U3) erzeugenden spannungsgesteuerten Oszillator (34) enthält.

3. Schaltungsanordnung nach einem der vorhergehenden Ansprüche, dadurch gekennzeichnet, daß der Impulsgenerator (6) ein die Schaltimpulse erzeugendes Kippglied (26) enthält, dem die Startimpulse (U3) und das Signal der ersten Vergleichsschaltung (27) zugeführt werden.

4. Schaltungsanordnung nach einem der vorhergehenden Ansprüche, dadurch gekennzeichnet, daß die Überlagerungsschaltung. (29) einen Verstärker (62) umfaßt, dessen nichtinvertierenden Eingang ein der gleichgerichteten Eingangsspannung proportionales Signal zugeführt wird und dessen invertierender Eingang mit einem an den Ausgang der Überlagerungsschaltung (29) angeschlossenen ersten Widerstand (64) und mit einem an den Ausgang des Integrators (28) angeschlossenen zweiten Widerstand (63) verbunden ist.

5. Schaltungsanordnung nach einem der vorhergehenden Ansprüche, dadurch gekennzeichnet, daß zwischen der Überlagerungsschaltung (29) und der ersten Vergleichsschaltung (27) ein Spannungsteiler (55, 56) angeordnet ist.

6. Schaltungsanordnung nach einem der vorhergehenden Ansprüche, dadurch gekennzeichnet, daß die Spule (l0) einerseits mit dem Gleichrichter (4) und andererseits mit dem Transistor (ll) und über die Diode (l2) mit der Parallelschaltung aus Last (l4) und Kondensator (l3) verbunden ist.

7. Schaltungsanordnung nach einem der Ansprüche l bis 5, dadurch gekennzeichnet, daß der Transistor (70) einerseits mit dem Gleichrichter (4) und andererseits mit der Diode (7l) und über die Spule (72) mit der Parallelschaltung aus Last (74) und Kondensator (73) verbunden ist.

8. Schaltungsanordnung nach einem der Ansprüche l bis 5, dadurch gekennzeichnet, daß der Transistor (75) einerseits mit dem Gleichrichter (4) und andererseits mit der Spule (77) und über die Diode (76) mit der Parallelschaltung aus Kondensator (78) und Last (79) verbunden ist.

**Claims**

1. A circuit arrangement for forming a direct voltage from an essentially sinusoidal input voltage comprising a filter (1) for suppressing high-frequency interference signals, a switched mode power supply part (5) which is composed of a diode (12, 71, 76), a coil (10, 72, 77), a capacitor (13, 73, 78) and a transistor (11, 70, 75) and is coupled to the filter (1) through a rectifier (4), while its elements are arranged so that in the conductive stage of the transistor (11, 70, 75) the diode (12, 71, 76) is cut off and the coil current flows at least through the transistor (11, 70, 75) and in the cut-off state flows through the diode (12, 71, 76) and a parallel arrangement of a load (14, 74, 79) and the capacitor (13, 73, 78), and a pulse generator (6), which forms from the input voltage switching pulses for the transistor (11, 70, 75), whose frequency is varied uniformly in time between a minimum frequency at the maximum value of the rectified input voltage and a maximum frequency at the minimum value, characterized in that the pulse generator (6) comprises a voltage-to-frequency converter (25), which forms from the input voltage starting pulses, which determine the beginning of the switching pulses and whose frequency is varied between the extreme values in such a manner that the second derivative of the frequency with respect to time is always zero or negative and in that the pulse generator (6) comprises a first integrator (28), which produces an integrated output signal (U5) proportional to the output current of the rectifier (4) and whose time constant is larger than the reciprocal value of the minimum frequency, a superimposition circuit (29) forming the difference between a signal proportional to the rectified input voltage and the output signal of the first integrator (28) and a first comparison circuit (27), which produces a signal for terminating a pulse when a signal proportional to the output current of the rectifier (4) exceeds the output signal (U4) of the superimposition circuit (29).

2. A circuit arrangement as claimed in Claim 1, characterized in that the voltage-to-frequency converter (25) comprises a second comparison circuit (31) comparing a reference voltage (Uref) with a voltage (U1) proportional to the rectified input voltage, a monostable trigger element (32) activated by the comparison circuit at a larger reference voltage, a second integrator (33), which integrates the output signal of the monostable trigger element (32) and whose time constant is larger than the reciprocal value of the frequency of the input voltage, and a voltage-controlled oscillator (34) controlled by the second integrator (33) and producing the starting pulses (U3).

3. A circuit arrangement as claimed in any one of the preceding Claims, characterized in that the pulse generator (6) comprises a trigger element (26), which produces the switching pulses and to which the starting pulses (U3) and the signal of the first comparison circuit (27) are supplied.

4. A circuit arrangement as claimed in anyone of the preceding Claims, characterized in that the superimposition circuit (29) comprises an amplifier (62), to the noninverting input of which is supplied a signal proportional to the rectified input voltage and the inverting input of which is connected to a first resistor (64) and to the output of the superimposition circuit (29) and to a second resistor (63) connected to the output of the integrator.

5. A circuit arrangement as claimed in any one of the preceding Claims, characterized in that a voltage divider (55, 56) is arranged between the superimposition circuit (29) and the first comparison circuit (27).

6. A circuit arrangement as claimed in any one of the preceding Claims, characterized in that the coil (10) is connected on the one hand to the rectifier (4) and on the other hand to the transistor (11) and through the diode (12) to the parallel arrangement of the load (14) and the capacitor (13).

7. A circuit arrangement as claimed in any one of Claims 1 to 5, characterized in that the transistor (70) is connected on the one hand to the rectifier (4) and on the other hand to the diode (71) and through the coil (72) to the parallel arrangement of the load (74) and the capacitor (73).

8. A circuit arrangement as claimed in any one of Claims 1 to 5, characterized in that the transistor (75) is connected on the one hand to the rectifier (4) and on the other hand to the coil (77) and through the diode (76) to the parallel arrangement of the capacitor (78) and the load (79).

**Revendications**

1. Montage de circuit pour la production d'une tension continue à partir d'une tension d'entrée essentiellement sinusoïdale, comportant un filtre (1) pour la suppression de signaux parasites de haute fréquence, un bloc d'alimentation à mode commuté (5) comprenant une diode (12, 71, 76), une bobine (10, 72, 77), un condensateur (13, 73, 78) et un transistor (11, 70, 75), qui est couplé au filtre (1) par l'intermédiaire d'un redresseur (4) et dont les éléments sont agencés d'une manière telle que, dans l'état conducteur du transistor (11, 70, 75), la diode (12, 71, 76) soit bloquée et le courant de bobine passe au moins par le transistor (11, 70, 75) et que, dans l'état bloqué, il passe par la diode (12, 71, 76) et par un montage en parallèle d'une charge (14, 74, 79) et du condensateur (13, 73, 78), ainsi qu'un générateur d'impulsions (6) qui, à partir de la tension d'entrée, produit des impulsions de commutation pour le transistor (11, 70, 75), dont la fréquence varie de manière monotone dans le temps entre une fréquence minimale pour une valeur maximale de la tension d'entrée redressée et une fréquence maximale pour une valeur minimale de cette tension, caractérisé en ce que le générateur d'impulsions (6) contient un convertisseur de tension-fréquence (25) qui, à partir de la tension d'entrée, fournit le début des impulsions de démarrage déterminant les impulsions de commutation, dont la fréquence varie entre des valeurs extrêmes d'une manière telle que la dérivée seconde de la fréquence en fonction du temps soit toujours nulle ou négative, et que le générateur d'impulsions (6) contient un premier intégrateur (28) qui produit un signal de sortie intégré (U5) proportionnel au courant de sortie du redresseur (4) et dont la constante de temps est supérieure à la valeur réciproque de la fréquence minimale, un circuit de superposition (29) formant la différence entre un signal proportionnel à la tension d'entrée redressée et le signal de sortie du premier intégrateur (28) et un premier circuit comparateur (27) qui produit un signal pour la terminaison d'une impulsion lorsqu'un signal (U4) proportionnel au courant de sortie du redresseur (4) est supérieur au signal de sortie du circuit de superposition (29).

2. Montage de circuit suivant la revendication 1, caractérisé en ce que le convertisseur de tension-fréquence (25) contient un second circuit comparateur (31) comparant une tension de référence (Uref) à une tension (U1) proportionnelle à la tension d'entrée redressée, une bascule monostable (32) activée par le circuit comparateur (31) dans le cas d'une tension de référence (Uref) supérieure, un second intégrateur (33) intégrant le signal de sortie de la bascule monostable (32), dont la constante de temps est supérieure à la valeur réciproque de la fréquence de la tension d'entrée, et un oscillateur (34) commandé en tension, produisant les impulsions de démarrage (U3) sous la commande du second intégrateur (33).

3. Montage de circuit suivant l'une quelconque des revendications précédentes, caractérisé en ce que le générateur d'impulsions (6) comprend une bascule (26) produisant les impulsions de commutation, à laquelle les impulsions de démarrage (U3) et le signal du premier circuit comparateur (27) sont appliqués.

4. Montage de circuit suivant l'une quelconque des revendications précédentes, caractérisé en ce que le circuit de superposition (29) comprend un amplificateur (62) dont l'entrée non inverseuse reçoit un signal proportionnel à la tension d'entrée redressée et dont l'entrée inverseuse est connectée à une première résistance (64) connectée à la sortie du circuit de superposition (29) et à une seconde résistance (63) connectée à la sortie de l'intégrateur (28).

5. Montage de circuit suivant l'une quelconque des revendications précédentes, caractérisé en ce qu'entre le circuit de superposition (29) et le premier circuit comparateur (27) est installé un diviseur de tension (55, 56).

6. Montage de circuit suivant l'une quelconque des revendications précédentes, caractérisé en ce que la bobine (10) est connectée, d'une part, au redresseur (4) et, d'autre part, au transistor (11) et, par l'intermédiaire de la diode (12), au montage en parallèle de la charge (14) et du condensateur (13).

7. Montage de circuit suivant l'une quelconque des revendications 1 à 5, caractérisé en ce que le transistor (70) est connecté, d'une part, au redresseur (4) et, d'autre part, à la diode (71) et, par l'intermédiaire de la bobine (72), au montage en parallèle de la charge (74) et du condensateur (73).

8. Montage de circuit suivant l'une quelconque des revendications 1 à 5, caractérisé en ce que le transistor (75) est connecté, d'une part, au redresseur (4) et, d'autre part, à la bobine (77) et, par l'intermédiaire de la diode (76), au montage en parallèle du condensateur (78) et de la charge (79).

FIG.1

FIG. 2

FIG. 3

FIG. 4